# EUROPÄISCHE PATENTSCHRIFT

(11) **EP 2 156 081 B1**
(45) Veröffentlichungstag und Bekanntmachung des Hinweises auf die Patenterteilung: **23.02.2011**
(21) Anmeldenummer: 08750287.8
(22) Anmeldetag: 14.05.2008
(51) Int. Cl.: F16K 37/00, G05B 23/02

(54) **VERFAHREN ZUR ÜBERPRÜFUNG DER FUNKTIONSFÄHIGKEIT EINES STELLGERÄTES**
METHOD FOR CHECKING THE OPERATIONAL CAPABILITY OF A CONTROL DEVICE
PROCÉDÉ DE SURVEILLANCE DU BON FONCTIONNEMENT D'UN APPAREIL DE COMMANDE

(30) Priorität: 15.05.2007 DE 102007022762
(43) Veröffentlichungstag der Anmeldung: 24.02.2010
(73) Patentinhaber: Siemens Aktiengesellschaft, 80333 München (DE)
(72) Erfinder: HEER, Klaus-Peter, 76863 Herxheim (DE); HIRSCH, Volker, 76889 Steinfeld (DE)
(86) Internationale Anmeldenummer: PCT/EP2008/055908
(87) Internationale Veröffentlichungsnummer: WO 2008/138949

(56) Entgegenhaltungen:
- GB-A- 2 372 087
- US-A1- 2002 108 436
- US-A1- 2006 191 314
- US-A1- 2006 219 299
- US-A1- 2007 018 127

## Beschreibung

Die Erfindung betrifft ein Verfahren zur Überprüfung der Funktionsfähigkeit eines Stellgerätes, mit einem Stellventil, das über einen Stellantrieb mittels eines an dem Stellventil angreifenden Stellelements verstellbar ist, einem Positionsgeber, der die Ist-Position des Stellelements erfasst, und einem elektro-pneumatischen Stellungsregler, der in Abhängigkeit von der Ist-Position und einer Soll-Position eine pneumatische Stellgröße erzeugt, die dem Stellantrieb über ein aktiviertes Magnetventil zugeführt wird, welches zu seiner Aktivierung von einer leittechnischen Einrichtung mit einer Versorgungsspannung versorgt wird und im Notfall zur Entlüftung des Stellantriebs durch Abschalten der Versorgungsspannung deaktivierbar ist
- wobei zur Durchführung eines Partial-Stroke-Tests das Stellelement kurzzeitig über einen Teil seines Stellweges bewegt und dabei die Stellbewegung erfasst wird und
- wobei zur Durchführung eines Magnetventil-Tests das Magnetventil kurzzeitig deaktiviert wird, so dass sich das Stellelement nur über einen Teil seines Stellweges bewegt.

Ein solches Verfahren ist aus der US 2006/0219299 A1 bekannt. Bei dem bekannten Verfahren wird das Stellelement bzw. Stellventil im Rahmen eines Partial-Stroke-Tests mittels des Stellungsreglers aus der jeweils aktuellen Position über einen Teil seines Stellweges bewegt und anschließend wieder zurückbewegt. Die Stellungsänderung ist dabei so gering, dass der laufende Betrieb der Anlage, in der das Stellventil eingebaut ist, nicht unterbrochen werden muss und nur unwesentlich gestört wird. Während des Partial-Stroke-Tests wird die Stellbewegung erfasst und abgespeichert.

Zum Testen des Magnetventils wird dieses durch Unterbrechen seiner Spannungsversorgung kurzzeitig deaktiviert und dabei die Druckdifferenz zwischen der mit dem Stellungsregler verbundenen Seite und der mit dem Stellantrieb verbundenen Seite des Magnetventils überwacht. Der Test des Magnetventils wird als erfolgreich bewertet, wenn bei dem kurzzeitigen Deaktivieren des Magnetventils der Druck auf der Seite des Stellantriebs signifikant abfällt, während der von dem Stellungsregler gelieferte Druck weitgehend unverändert bleibt.

Es ist wünschenswert, den Partial-Stroke-Test sowie den Magnetventil-Test automatisch durch eine leittechnische Einrichtung außerhalb des Stellgerätes veranlassen, überwachen und auswerten zu können. Da jedoch die meisten Stellventile sehr schnell reagieren müssen, um im Notfall einen Fluidstrom abzustellen zu können, sind die Rechenzykluszeiten leittechnischer Einrichtungen in der Regel zu lang, um den Ablauf des Magnetventil-Tests unmittelbar zu steuern und auszuwerten.

Gemäß der Erfindung wird dieses Problem dadurch gelöst, dass bei dem Verfahren der eingangs angegebenen Art
- die Versorgungsspannung dem Magnetventil über einen steuerbaren Schalter zugeführt wird,
- der steuerbare Schalter zum Starten des Magnetventil-Tests mittels eines von der leittechnischen Einrichtung erzeugten Magnetventil-Testsignals geöffnet wird, und
- das Magnetventil-Testsignal dem steuerbaren Schalter über einen von dem Stellelement steuerbaren Grenzwertschalter zugeführt wird, der geöffnet wird, wenn das Stellelement eine vorgegebene Stellung erreicht.

Die Verwendung eines Grenzwertschalters zusätzlich zu dem bereits vorhandenen Positionsgeber in einem Stellgerät ist zwar aus der US 2006/0191314 A1 bekannt, jedoch dient dort der Grenzwertschalter dazu, die Bewegung des Stellelements bei dem Partial-Stroke-Test redundant zu erfassen und im Weiteren auch redundant auszuwerten; ein Test des Magnetventils ist dagegen nicht vorgesehen.

Als Reaktion auf das von der leittechnischen Einrichtung erzeugte Magnetventil-Testsignal, unterbricht der steuerbare Schalter die Spannungsversorgung des Magnetventils, so dass dieses deaktiviert und in Folge der Stellantrieb entlüftet wird. Daraufhin bewegt sich das Stellelement bis zu der vorgegebenen Stellung, bei deren Erreichen der Grenzwertschalter öffnet und den Weg des Magnetventil-Testsignals zu dem steuerbaren Schalter hin unterbricht. Der steuerbare Schalter schließt daher wieder die Spannungsversorgung für das Magnetventil, welches dadurch aktiviert die pneumatische Verbindung zwischen dem Stellungsregler und dem Stellantrieb wieder herstellt, so dass die Bewegung des Stellelements gestoppt und umgekehrt wird. Die vorgegebene Stellung, bei der der Grenzwertschalter öffnet, ist so gewählt, dass der laufende Betrieb der Anlage, in der das Stellventil eingebaut ist, durch die Bewegung des Stellelements während des Tests nur unwesentlich gestört wird.

Der Vorteil des erfindungsgemäßen Verfahrens besteht darin, dass der Magnetventil-Test unabhängig von der jeweiligen Rechenzykluszeit der leittechnischen Einrichtung einerseits und der Reaktionsgeschwindigkeit des Stellgeräts andererseits durchgeführt werden kann. Die Dauer des von der leittechnischen Einrichtung erzeugten Magnetventil-Testsignals ist unkritisch, weil in jedem Fall die Bewegung des Stellelements gestoppt und umgekehrt wird, wenn es die vorgegebene Stellung erreicht.

Vorzugsweise wird das Magnetventil-Testsignal so lange erzeugt, dass das Stellelement mehrfach um die vorgegebene Stellung pendelt. Dies ergibt sich daraus, dass das Stellglied nach Erreichen der vorgegebenen Stellung wieder zurückbewegt wird, so dass der Grenzwertschalter wieder schließt; dann wird das anstehende Magnetventil-Testsignal wieder zu dem steuerbaren Schalter durchgeschaltet, so dass dieser öffnet, das Magnetventil deaktiviert wird und das Stellelement wieder zu der vorgegebenen Stellung bewegt wird. Dieser Vorgang wiederholt sich solange, wie das Magnetventil-Testsignal erzeugt wird, so dass das Stellelement um die vorgegebene Stellung pendelt. Dementsprechend erfasst der Positionsgeber eine um die vorgegebene Stellung oszillierende Position, deren Mittelwert der vorgegebenen Stellung entspricht und die über den Stellungsregler an die leittechnische Einrichtung übertragen und dort zu Protokollzwecken abgespeichert werden kann. Auch hierfür ist die jeweilige Rechenzykluszeit der leittechnischen Einrichtung unkritisch, weil das Magnetventil-Testsignal nur ausreichend lang erzeugt werden muss.

Aus der Pendelbewegung (Frequenz und Amplitude) des Stellelements während des Magnetventil-Tests kann auf den technischen Zustand des Stellgerätes geschlossen werden. Dazu kann die von dem Positionsgeber erfasste oszillierende Wegänderung des Stellelements ausgewertet oder alternativ und in besonders einfacher Weise das Puls-Pausen-Verhältnis des hinter dem Grenzwertschalter dem steuerbaren Schalter zugeführten Magnetventil-Testsignals erfasst und ausgewertet werden. So kann beispielsweise das bei einem neuen Stellgerät erfasste Puls-Pausen-Verhältnis in dem Stellungsregler abgespeichert werden und als Referenzmuster für bei späteren Magnetventil-Tests erfasste Puls-Pausen-Verhältnisse dienen, wobei die Abweichungen von dem Referenzmuster Veränderungen des technischen Zustands des Stellgerätes und ggf. einen Wartungsbedarf signalisieren.

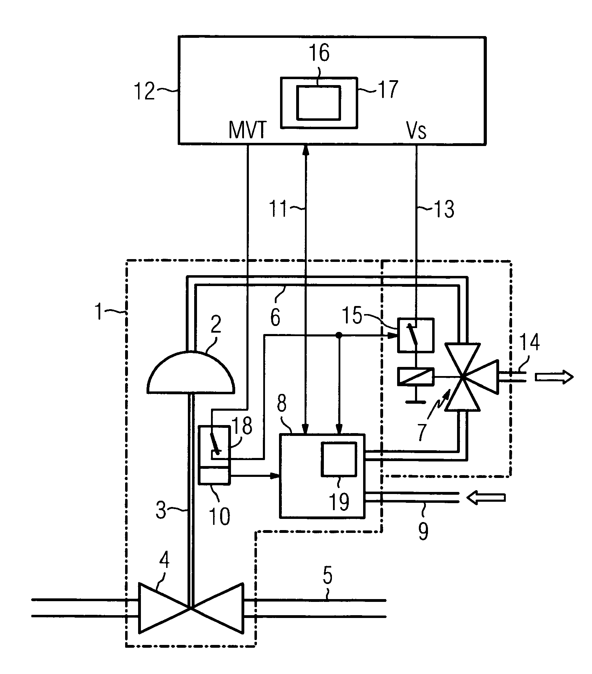

Zur weiteren Erläuterung der Erfindung wird im Folgenden auf die einzige Figur der Zeichnung Bezug genommen, die ein Ausführungsbeispiel eines Stellgerätes zur Durchführung des erfindungsgemäßen Verfahrens zeigt.

Das Stellgerät 1 enthält einen pneumatischen Stellantrieb 2, der über ein Stellelement 3, hier in Form einer Hubstange, ein Stellventil 4 betätigt und dabei den Fluidstrom in einer Rohrleitung 5 steuert. Der Stellantrieb 2 ist über eine pneumatische Leitung 6 mit einem darin angeordneten Magnetventil 7 an einem Stellungsregler 8 angeschlossen, der aus einer Versorgungsleitung 9 mit Druckluft versogt wird. Ein Positionsgeber 10 erfasst die Ist-Position des Stellelements 3 und führt sie dem Stellungsregler 8 zu, der in Abhängigkeit von der Ist-Position und einer vorgebbaren Soll-Position als Stellgröße einen variablen Druck in der Leitung 6 einstellt, um das Stellelement 3 mit dem Ventil 4 in die Soll-Position zu bewegen. Um eine Soll-Position vorzugeben, kann der Stellungsregler 8 über eine Kommunikationsleitung 11, z. B. eine 4-20 mA-Leitung, mit einer leittechnischen Einrichtung 12 verbunden sein.

Das Magnetventil 7, welches innerhalb des Stellgeräts 1 oder außerhalb davon angeordnet sein kann, ist als Dreiwegeventil ausgebildet und erhält von der leittechnischen Einrichtung 12 über eine Leitung 13 eine Versorgungsspannung Vs zugeführt.

Im Normalfall ist die Versorgungsspannung Vs eingeschaltet, so dass das Magnetventil 7 aktiviert ist und den Stellungsregler 8 mit dem Stellantrieb 2 pneumatisch verbindet. Im Notfall schaltet die leittechnische Einrichtung 12 die Versorgungsspannung Vs ab, so dass das dann deaktivierte Magnetventil 7 den Stellantrieb 2 von dem Stellungsregler 8 trennt und stattdessen über einen Magnetventil-Auslass 14 entlüftet. Der Stellantrieb 2 wird daraufhin drucklos und bewegt das Stellelement 3 mit dem Ventil 4, beispielsweise unter Einwirkung einer Feder in dem Stellantrieb 2, in eine Sicherheitsposition. Die Deaktivierung und spätere Wiederaktivierung des Magnetventils 7 kann zusätzlich auch an dem Stellgerät 1 selbst vorgenommen werden, indem ein steuerbarer Schalter 15 im Verlauf der Leitung 13 geöffnet bzw. wieder geschlossen wird.

In einem von der leittechnischen Einrichtung 12 automatisch in regelmäßigen Zeitabständen ausgelösten Partial-Stroke-Test wird das Stellventil 4 bei aktiviertem Magnetventil 7 kurzzeitig aus der jeweils aktuellen Position über einen Teil seines Stellweges bewegt und anschließend wieder zurück bewegt. Die Stellungsänderung ist dabei so gering, dass der laufende Betrieb der Anlage, in der das Ventil 4 eingebaut ist, nicht oder nur unwesentlich gestört wird. Bei jedem Test wird die erreichte Ist-Position des Stellgliedes 3 bzw. Ventils 4 über die Kommunikationsleitung 11 zu der leittechnischen Einrichtung 12 übertragen und dort in einem Speicher 16 abgespeichert und protokolliert. Der Partial-Stroke-Test wird in Abhängigkeit davon als erfolgreich bewertet, dass eine vorgegebene Stellungsänderung innerhalb einer Mindestzeit erreicht wird oder dass die Stellungsänderung innerhalb einer vorgegebenen Zeit einen Mindestwert erreicht. Auf diese Weise kann festgestellt werden, wenn das Stellventil 4 blockiert ist oder zu langsam reagiert. In einer Auswerteeinrichtung 17 der Einrichtung 12 können die während aufeinanderfolgender Partial-Stroke-Tests abgespeicherten Wegänderungen miteinander verglichen und auf trendhafte Veränderungen analysiert werden, um beispielsweise den Wartungsbedarf zu ermitteln.

Nach jedem oder jedem n-ten Partial-Stroke-Test wird die Funktionsfähigkeit des Magnetventils 7 getestet, indem das Magnetventil 7 deaktiviert wird. Die leittechnische Einrichtung 12 erzeugt dazu ein Magnetventil-Testsignal MVT, mit dem der steuerbare Schalter 15 geöffnet wird. Das Magnetventil-Testsignal MVT wird dem steuerbaren Schalter 15 über einen Grenzwertschalter 18 in dem Stellgerät 1 zugeführt. Der Grenzwertschalter 18 ist in der Ausgangsposition des Stellelements 3 geschlossen und öffnet bei einer vorgegebenen Stellung des Stellelements 3. Die vorgegebene Stellung wird bei einer geringen Bewegung des Stellelements 3 von z. B. 10 bis 20% des Stellweges von der Ausgangsposition weg erreicht. Der Grenzwertschalter 18 kann separat zu dem Positionsgeber 10 vorgesehen sein oder baulich in dem Positionsgeber 10 integriert sein. Der steuerbare Schalter 15 kann beispielsweise ein Relais sein, dessen Kontakte im nicht erregten Zustand geschlossen sind und bei Erregung durch das Magnetventil-Testsignal MVT öffnen.

Als Reaktion auf das von der leittechnischen Einrichtung 12 erzeugte Magnetventil-Testsignal MVT, unterbricht der steuerbare Schalter die Spannungsversorgung des Magnetventils 7, so dass dieses deaktiviert und in Folge der Stellantrieb 2 entlüftet wird. Daraufhin bewegt sich das Stellelement 3 bis zu der vorgegebenen Stellung, bei der der Grenzwertschalter 18 öffnet und den Weg des Magnetventil-Testsignals MVT zu dem steuerbaren Schalter 15 hin unterbricht. Der steuerbare Schalter 15 schließt daher wieder die Spannungsversorgung für das Magnetventil 7, welches dadurch aktiviert die pneumatische Verbindung zwischen dem Stellungsregler 8 und dem Stellantrieb 2 wieder herstellt, so dass sie Bewegung des Stellelements 3 gestoppt und umgekehrt wird. Dies führt dazu, dass der Grenzwertschalter 18 wieder schließt und das anstehende Magnetventil-Testsignal MVT wieder zu dem steuerbaren Schalter 15 durchschaltet, so dass dieser öffnet, das Magnetventil 7 deaktiviert wird und das Stellelement 3 wieder zu der vorgegebenen Stellung bewegt wird. Dieser Vorgang wiederholt sich solange, wie die leittechnische Einrichtung 12 das Magnetventil-Testsignal MVT erzeugt, so dass das Stellelement 3 um die vorgegebene Stellung pendelt. Die dabei von dem Positionsgeber 10 erfasste Position wird über den Stellungsregler 8 an die leittechnische Einrichtung 12 übertragen und dort zu Protokollzwecken in dem Speicher 16 abgespeichert.

Während das Stellelement 3 um die vorgegebene Stellung pendelt, erfasst der Stellungsregler 8 zwischen dem Grenzwertschalter 18 und dem steuerbaren Schalter 15 das Magnetventil-Testsignal MVT. Der Stellungsregler 8 oder die leittechnische Einrichtung 12 werten das Puls-Pausen-Verhältnis des erfassten Testsignals MVT aus. Im Neuzustand des Stellgeräts 1 wird das erfasste Puls-Pausen-Verhältnis als Referenz in einen Speicher 19 des Stellungsreglers 8 oder der Einrichtung 12 hinterlegt. Im späteren Betrieb des Stellgeräts 1 wird das dann bei einem Magnetventil-Test erfasste Puls-Pausen-Verhältnis mit der Referenz verglichen, um Veränderungen des technischen Zustands des Stellgerätes 1 zu erkennen. Dieser Vergleich und seine Auswertung erfolgen z. B. in der Auswerteeinrichtung 17 der leittechnischen Einrichtung 12.

## Patentansprüche

1. Verfahren zur Überprüfung der Funktionsfähigkeit eines Stellgerätes (1), mit einem Stellventil (4), das über einen Stellantrieb (2) mittels eines an dem Stellventil (2) angreifenden Stellelements (3) verstellbar ist, einem Positionsgeber (10), der die Ist-Position des Stellelements (3) erfasst, und einem elektro-pneumatischen Stellungsregler (8), der in Abhängigkeit von der Ist-Position und einer Soll-Position eine pneumatische Stellgröße erzeugt, die dem Stellantrieb (2) über ein aktiviertes Magnetventil (7) zugeführt wird, welches zu seiner Aktivierung von einer leittechnischen Einrichtung (12) mit einer Versorgungsspannung (Vs) versorgt wird und im Notfall zur Entlüftung des Stellantriebs (2) durch Abschalten der Versorgungsspannung (Vs) deaktivierbar ist
- wobei zur Durchführung eines Partial-Stroke-Tests das Stellelement (3) kurzzeitig über einen Teil seines Stellweges bewegt und dabei die Stellbewegung erfasst wird und
- wobei zur Durchführung eines Magnetventil-Tests das Magnetventil (7) kurzzeitig deaktiviert wird, so dass sich das Stellelement (3) nur über einen Teil seines Stellweges bewegt,
**dadurch gekennzeichnet,**
- **dass** die Versorgungsspannung (Vs) dem Magnetventil (7) über einen steuerbaren Schalter (15) zugeführt wird,
- **dass** der steuerbare Schalter (15) zum Starten des Magnetventil-Tests mittels eines von der leittechnischen Einrichtung (12) erzeugten Magnetventil-Testsignals (MVT) geöffnet wird, und
- **dass** das Magnetventil-Testsignal (MVT) dem steuerbaren Schalter (15) über einen von dem Stellelement (3) steuerbaren Grenzwertschalter (18) zugeführt wird, der geöffnet wird, wenn das Stellelement (3) eine vorgegebene Stellung erreicht.

2. Verfahren nach Anspruch 1, **dadurch gekennzeichnet, dass** das Magnetventil-Testsignal (MVT) so lange erzeugt wird, dass das Stellelement (3) mehrfach um die vorgegebene Stellung pendelt.

3. Verfahren nach Anspruch 1 oder 2, **dadurch gekennzeichnet, dass** während des Magnetventil-Tests die dabei ausgeführte Wegänderung des Stellelements (3) erfasst und abgespeichert wird.

4. Verfahren nach Anspruch 3, **dadurch gekennzeichnet, dass** die Wegänderung des Stellelements (3) von dem Stellungsregler (8) an die leittechnische Einrichtung (12) übertragen und dort abgespeichert wird.

5. Verfahren nach einem der vorangehenden Ansprüche, **dadurch gekennzeichnet, dass** das Puls-Pausen-Verhältnis des hinter dem Grenzwertschalter (18) dem steuerbaren Schalter (15) zugeführten Magnetventil-Testsignals (MVT) abgespeichert und zur Ermittlung des technischen Zustands des Stellgerätes (1) ausgewertet wird.

## Claims

1. Method for checking the operational capability of a control device (1), with a control valve (4) able to be adjusted via a positioning drive (2) by means of a positioning element (3) engaging with the control valve, a position generator (10) which detects the actual position of the positioning element (3) and an electro pneumatic position controller (8) which generates a pneumatic positioning variable as a function of a setpoint position, which is fed to the positioning drive (2) via an activated magnetic valve (7) which, for its activation, is supplied with a supply voltage (Vs) by an operation and control device (12) and in an emergency is able to be deactivated for bleeding the positioning drive (2) by switching off the supply voltage (Vs)
- whereby, for carrying out a partial stroke test, the positioning element (3) is moved briefly over a part of its positioning path and during this process the positioning movement is detected and
- whereby, for carrying out a magnetic valve test, the magnetic valve (7) is briefly deactivated, so that the positioning element (3) only moves over a part of its positioning path,
**characterised in that**
- the supply voltage (Vs) is fed to the magnetic valve (7) via a controllable switch (15),
- the controllable switch (15), for starting the magnetic valve test, is opened by means of a magnetic valve test signal (MVT) generated by the operation and control device (12), and
- the magnetic valve test signal (MVT) is fed to the controllable switch (15) via a limit value switch (18) able to be controlled by the positioning element (3) when the positioning element (3) reaches a predetermined position.

2. Method according to claim 1, **characterised in that** the magnetic valve test signal (MVT) is generated long enough for the positioning element (3) to swing back and forth a number of times around the predetermined position.

3. Method according to claim 1 or 2, **characterised in that**, during the magnetic valve test, the change in position of the positioning element (3) executed during said test is detected and stored.

4. Method according to claim 3, **characterised in that** the change in position of the positioning element (3) is transferred from the position controller (8) to the operation and control device (12) and is stored there.

5. Method according to one of the previous claims, **characterised in that** the duty ratio of the magnetic valve test signal (MVT) fed to the controllable switch (15) behind the limit value switch (18) is stored and evaluated to determine the technical state of the control device (1).

## Revendications

1. Procédé de contrôle de l'aptitude à fonctionner d'un appareil (1) de commande, comprenant une vanne (4) de régulation, qui est réglable par l'intermédiaire d'un organe ( 2 ) moteur au moyen d'un élément ( 3 ) de réglage attaquant la vanne ( 4 ) de régulation, un capteur ( 10 ) de position, qui relève la position réelle de l'élément ( 3 ) de réglage, et un régulateur ( 8 ) électropneumatique de position, qui produit, en fonction de la position réelle et d'une position de consigne, une grandeur pneumatique de réglage, qui est envoyée à l'organe ( 2 ) par un électroaimant ( 7 ) activé, lequel est, pour son activation, alimenté en une tension ( Vs ) d'alimentation par un dispositif ( 12 ) en technique de conduction et, en cas d'urgence, peut être désactivé par interruption de la tension ( Vs ) d'alimentation pour mettre l'organe ( 2 ) moteur à l'atmosphère,
- dans lequel, pour effectuer un test de course partielle, l'élément ( 3 ) de réglage est déplacé brièvement sur une partie de sa course de réglage et détecte ainsi le déplacement de réglage et
- dans lequel, pour effectuer un test de l'électrovanne, l'électrovanne ( 7 ) est désactivée brièvement, de sorte que l'élément ( 3 ) de réglage ne se déplace que sur une partie de sa course de réglage,
**caractérisé**
- **en ce qu'**on applique la tension (Vs) d'alimentation à l'électrovanne (7) par un commutateur (15), qui peut être commandé,
- **en ce que** le commutateur ( 15 ), qui peut être commandé, est ouvert, pour faire commencer le test de l'électrovanne au moyen d'un signal ( MVT ) de test de l'électrovanne produit par le dispositif ( 12 ) de la technique de conduction, et
- **en ce que** le signal ( MVT ) de test de l'électrovanne est envoyé au commutateur ( 15 ), qui peut être commandé, par un commutateur ( 18 ) de valeur limite, qui peut être commandé par l'élément ( 3 ) de réglage et qui est ouvert, lorsque l'élément ( 3 ) de réglage atteint une position prescrite.

2. Procédé suivant la revendication 1, **caractérisé en ce que** le signal ( MVT ) de test de l'électrovanne est produit tant que l'élément ( 3 ) de réglage va et vient plusieurs fois autour de la position prescrite.

3. Procédé suivant la revendication 1 ou 2, **caractérisé en ce que**, pendant le test de l'électrovanne, on détecte et on mémorise la modification de course effectuée par l'élément ( 3 ) de réglage.

4. Procédé suivant la revendication 3, **caractérisé en ce qu'**on transmet la modification de course de l'élément (3) de réglage par le régulateur ( 8 ) de position au dispositif ( 12 ) de technique de conduction et on l'y mémorise.

5. Procédé suivant l'une des revendications précédentes, **caractérisé en ce qu'**on mémorise le rapport impulsion-intervalle entre les impulsions du signal ( MVT ) de test de l'électrovanne envoyé en aval du commutateur ( 18 ) de valeur limite au commutateur ( 15 ), qui peut être commandé, et on l'exploite, pour la détermination de l'état technique de l'appareil ( 1 ) de commande.
